# EUROPEAN PATENT APPLICATION

(11) **EP 2 999 091 A2**
(43) Date of publication of application: **23.03.2016**
(21) Application number: 15168153.3
(22) Date of filing: 19.05.2015
(51) Int. Cl.: H02K 3/28, H02P 1/00, H02K 3/12, H02K 11/00

(54) **MULTIPLEX WINDING SYNCHRONOUS GENERATOR**

(30) Priority: 28.05.2014 US 201414288835
(71) Applicant: Hamilton Sundstrand Corporation, Windsor Locks, CT 06096-1010 (US)
(72) Inventor: Giera, Jacek F., Glastonbury, CT 06033 (US); Rozman, Gregory I., Rockford, IL 61114 (US)
(74) Representative: Hughes, Andrea Michelle

(57) **Abstract**

A multiplex winding synchronous generator includes a stator core with a plurality of winding slots; and power coils being distributed in each of the winding slots that are configured to supply multi-phase alternating current (AC) power. Also, the stator core includes at least two sets of power coils being distributed in the slots.

## Description

### FIELD OF THE INVENTION

The subject matter disclosed herein relates to the field of synchronous machines, and to a multiplex stator winding of a synchronous generator and circuit topology that reduces parasitic effects due to application of multiplex stator windings.

### DESCRIPTION OF RELATED ART

In a power conversion system for an aircraft, a generator is operated in a generating mode to convert motive power from a prime mover, for example, a gas turbine engine into alternating current (AC) power. These aircraft generators require high reliability, redundancy, and fault tolerance. From this point of view, multiphase topologies have been adopted. One solution to multiphase operation is to use "duplex" or "multiplex" stator (armature) windings where multiple sets of coils in three-phase subsystems are wound around a stator core. "Duplex" stator windings are sometimes used in induction machines in order to provide a simple and cost-effective solution for six-phase operation using two sets of three-phase subsystems. In a duplex winding induction machine, a terminal of one phase of a three-phase sub-system can be connected to its complementary terminal of the same phase in another three-phase subsystem, thereby creating two parallel stator winding systems. Wound-field and permanent magnet (PM) brushless machines belong to the family of synchronous machines. Parallel connection of duplex stator winding in synchronous machines is similar to the synchronization of two independent synchronous generators. However, terminals across phases cannot be connected together because of a phase shift. Multiplex stator windings in synchronous machines always cause a phase shift between EMFs induced in phase windings belonging to two sets of three-phase subsystems. This phase shift can be caused by distribution of coils in slots or asymmetry in coils or both. This phase shift can cause current unbalance and circulating currents, which can lead to immediate thermal damage of the stator winding insulation due to overheating.

### BRIEF SUMMARY

According to one aspect of the invention, a multiplex winding synchronous generator includes a stator core with a plurality of winding slots; and power coils being distributed in each of the winding slots and configured to supply multi-phase alternating current (AC) power; where the stator core includes at least two sets of power coils being distributed in the slots.

In addition to one or more of the features described above, or as an alternative, further embodiments could include the at least two sets of power coils being configured as a three-phase subsystem.

In addition to one or more of the features described above, or as an alternative, further embodiments could include each phase of the three-phase subsystem with four power coils.

In addition to one or more of the features described above, or as an alternative, further embodiments could include four power coils that are connected in series to a terminal lead and a neutral point.

In addition to one or more of the features described above, or as an alternative, further embodiments could include a three-phase subsystem that is connected in parallel to one another.

In addition to one or more of the features described above, or as an alternative, further embodiments could include power coils that are distributed as a duplex stator winding configuration.

In addition to one or more of the features described above, or as an alternative, further embodiments could include power coils that are distributed as a multiplex stator winding configuration.

According to another aspect of the invention, a power circuit includes a synchronous generator having a stator core with a plurality of winding slots; power coils being distributed in each of the winding slots and configured to supply multi-phase alternating current (AC) voltage; at least one rectifier electrically connected to the power coils and configured to rectify an AC voltage to direct current (DC) voltage; and at least one DC bus for receiving the DC voltage; and an inverter electrically connected to the at least one DC bus for supplying inverted AC voltage.

In addition to one or more of the features described above, or as an alternative, further embodiments could include at least two sets of power coils that are configured as a three-phase subsystem.

In addition to one or more of the features described above, or as an alternative, further embodiments could include each phase of a three-phase subsystem with four power coils.

In addition to one or more of the features described above, or as an alternative, further embodiments could include four power coils that are connected in series to a terminal lead and a neutral point.

In addition to one or more of the features described above, or as an alternative, further embodiments could include a three-phase subsystem that is connected in parallel to one another.

In addition to one or more of the features described above, or as an alternative, further embodiments could include power coils that are distributed as a duplex stator winding configuration.

In addition to one or more of the features described above, or as an alternative, further embodiments could include power coils that are distributed as a multiplex stator winding configuration.

In addition to one or more of the features described above, or as an alternative, further embodiments could include a stator core with at least two sets of power coils being distributed in the slots.

Other aspects, features, and techniques of the invention will become more apparent from the following description taken in conjunction with the drawings.

### BRIEF DESCRIPTION OF THE SEVERAL VIEWS OF THE DRAWINGS

The subject matter, which is regarded as the invention, is particularly pointed out and distinctly claimed in the claims at the conclusion of the specification. The foregoing and other features and advantages of the invention are apparent from the following detailed description taken in conjunction with the accompanying drawings in which like elements are numbered alike in the several FIGURES:
FIG. 1 is a schematic view of a circuit topology for a duplex stator winding in a synchronous generator in accordance with an embodiment of the invention;
FIG. 2A is a schematic view of an exemplary coil winding configuration of the generator of FIG. 1 in accordance with an embodiment of the invention;
FIG. 2B is an arrangement of coil windings for a phase of the coil winding configuration of FIG. 2A in accordance with an embodiment of the invention;
FIG. 2C is an arrangement of coil windings for a phase of the coil winding configuration of FIG. 2A in accordance with an embodiment of the invention;
FIG. 2D is an arrangement of coil windings for a phase of the coil winding configuration of FIG. 2A in accordance with an embodiment of the invention; and
FIG. 3 is a schematic view of a circuit topology for a multiplex stator winding in a synchronous generator in accordance with o an embodiment of the invention.

### DETAILED DESCRIPTION

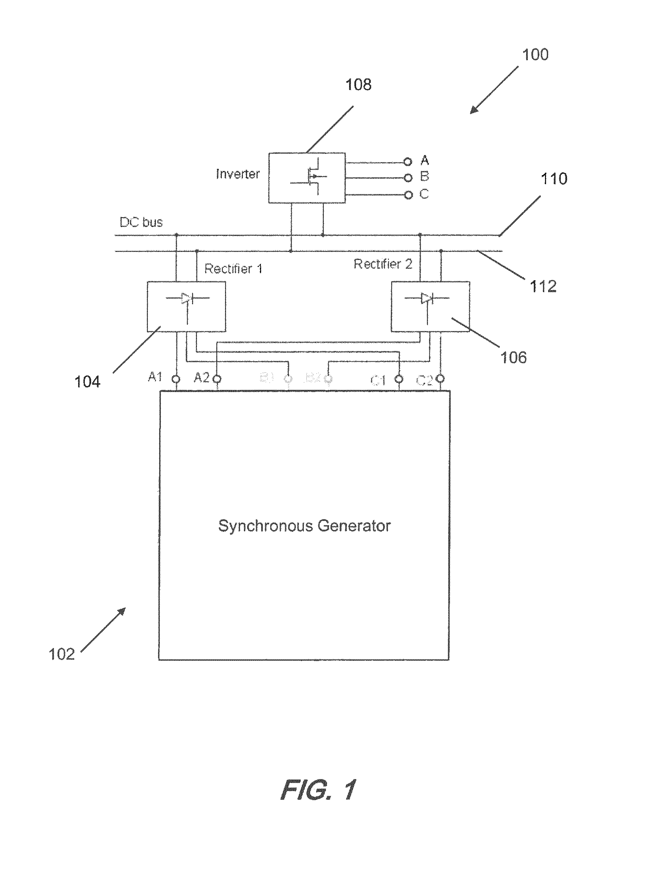

With reference to the figures, FIG. 1 depicts an exemplary circuit topology 100 for a synchronous generator 102 having a duplex stator winding configuration in accordance with an embodiment of the invention. Synchronous generator 102 can be a wound-field or permanent magnet (PM) synchronous generator 102 for supplying AC power through a duplex stator winding 3-phase subsystem. In an embodiment, circuit topology 100 can include a multiplex stator winding configuration for providing multiple phase AC power. A duplex stator winding configuration includes two redundant 3-phase sub-systems that represent two independent three-phase channels. Each three-phase channel is connected to respective rectifiers 104, 106. Each rectifier 104, 106 converts 3-phase AC power to direct current (DC) power. For example, a three-phase subsystem is electrically connected to rectifier 104 through terminal leads A1, B1, C1 and a second three-phase subsystem is electrically connected to rectifier 106 through terminal leads A2, B2, C2. In a non-limiting example, rectifiers 104, 106 can be active (controlled) or passive (uncontrolled) rectifiers. In an embodiment, rectifiers 104, 106 can include active rectifiers that are connected to a processor having instructions for implementing a DC load sharing algorithm that controls DC power at half-power during normal conditions and full power during failure of a second active rectifier or one or more windings in synchronous generator 102. DC power from rectifiers 104, 106 supplies DC current and voltage to a DC bus 110, 112. A six-phase inverter 108 electrically connects to DC bus 110, 112 for converting DC power to AC power. A processor can be configured to control inverter 108 in order to adjust a frequency and output voltage of AC power to desired values. Benefits include a parallel DC output from DC bus 110, 112 that reduces parasitic effects of current unbalance and/or circulating currents that are generally associated with multiplex wound synchronous generators in conventional systems. Additional benefits include generator efficiency from an active rectifier that draws sinusoidal currents from synchronous generator 102.

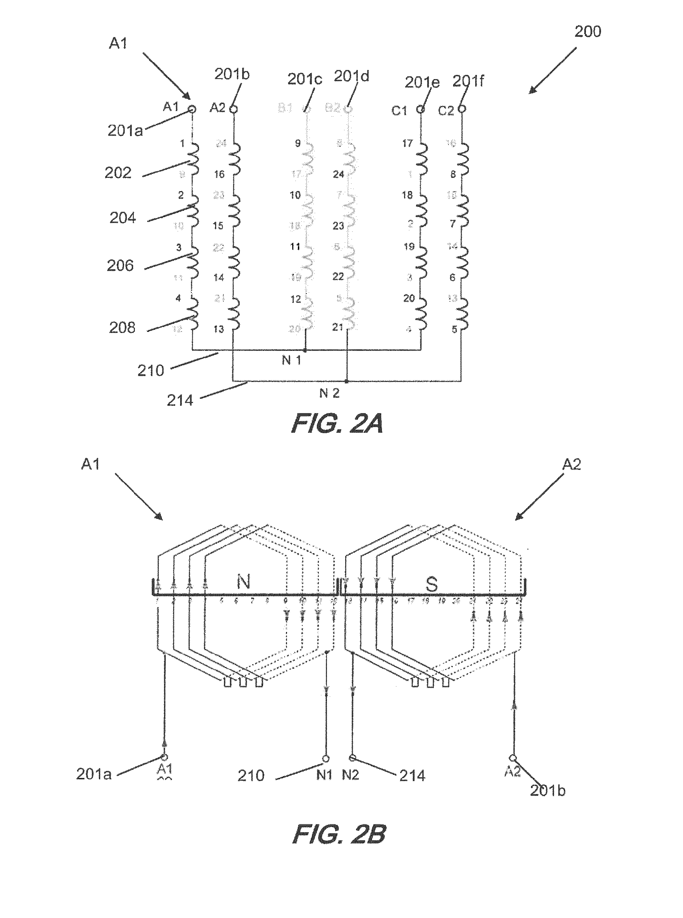

FIG. 2A illustrates a schematic view of an exemplary duplex stator winding configuration 200 for a stator (armature) of synchronous generator 102 of FIG. 1. Duplex winding configuration 200 includes two sets of completely independent windings on the same stator for providing a duplex stator winding three-phase subsystem having phases A1, B1, C1 and A2, B2, C2. In an exemplary embodiment, duplex stator winding configuration 200 includes an arrangement of power coils being distributed in 24 slots of a stator in order to supply six-phase power. Each phase of a three-phase subsystem A1, B1, C1 and A2, B2, C2 consists of four coils per phase for the two groups of windings and a separate neutral point that is galvanically isolated. For example, in phase A1, coil winding 202 is distributed in slots 1-9, coil winding 204 is distributed in slots 2-10, coil winding 206 is distributed in slots 3-11, and coil winding 4-12 is distributed in slots 4-12, with coil windings 202-208 forming a circuit in series with terminal lead 201a and neutral point 210. Additionally, terminal leads 201a-201b, 201c-201d, 201e-201f are connected in parallel. Similar coil windings for phases B1, C1 and A2, C2 can be provided with a connection to neutral point 214, as will be described below in reference to FIGS. 2B-2D. It is to be appreciated that duplex or multiplex windings can be used with stator laminations having typical slot shapes. Also, standard stator windings, e.g., lap or concentric coil windings with a minimum of two coil groups per phase, can be used to create duplex or multiplex stator windings.

FIG. 2B illustrates an exemplary arrangement of coil windings of FIG. 2A for phase A (comprising respective single phase A1 and A2 of each 3-phase subsystem) of synchronous generator 102 (FIG. 1) in accordance with an embodiment of the invention. As shown in FIG. 2B, phase A1 includes an arrangement of coil windings in series that begins at terminal lead 201a, continues with a series distribution arrangement in slots 1-9, 2-10, 3-11, and 4-12 under an N-pole, and terminates at neutral point 210. Similarly, phase A2 includes an arrangement of coil windings in series that begins at terminal lead 201b, continues with a series distribution arrangement in slots 24-16, 23-15, 22-14, and 21-13 under an S-pole, and terminates at neutral point 214.

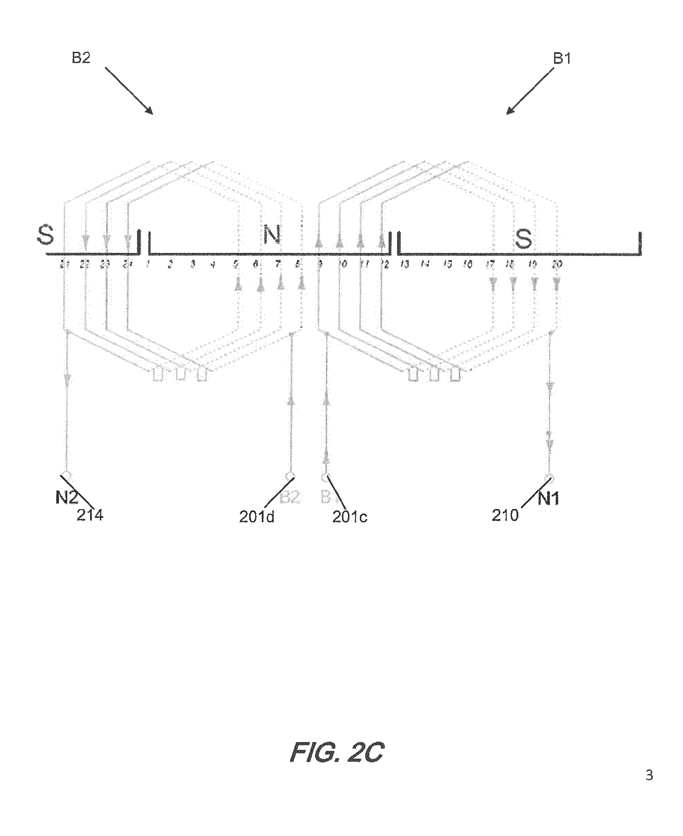

FIG. 2C illustrates an exemplary arrangement of coil windings for independent phase B (comprising respective single phase B1 and B2 of each 3-phase subsystem) for synchronous generator 102 in accordance with an embodiment of the invention. As shown in FIG. 2C, phase B1 includes an arrangement of coil windings in series that begins at terminal lead 201 c, continues with a series distribution arrangement in slots 9-17, 10-18, 11-19, and 12-20 under S- and N-poles (i.e., slots 17, 18, 19, 20 under an S-pole; slots 9, 10, 11, 12 under an N-pole), and terminates at neutral point 214. Similarly, phase B2 includes an arrangement of coil windings in series that begins at terminal lead 201d, continues with a series distribution arrangement in slots 8-24, 7-23, 6-22, and 5-21 under N-and S-poles (slots 5, 6, 7, 8 under an N-pole; slots 21, 22, 23, 24 under an S-pole), and terminates at neutral point 214.

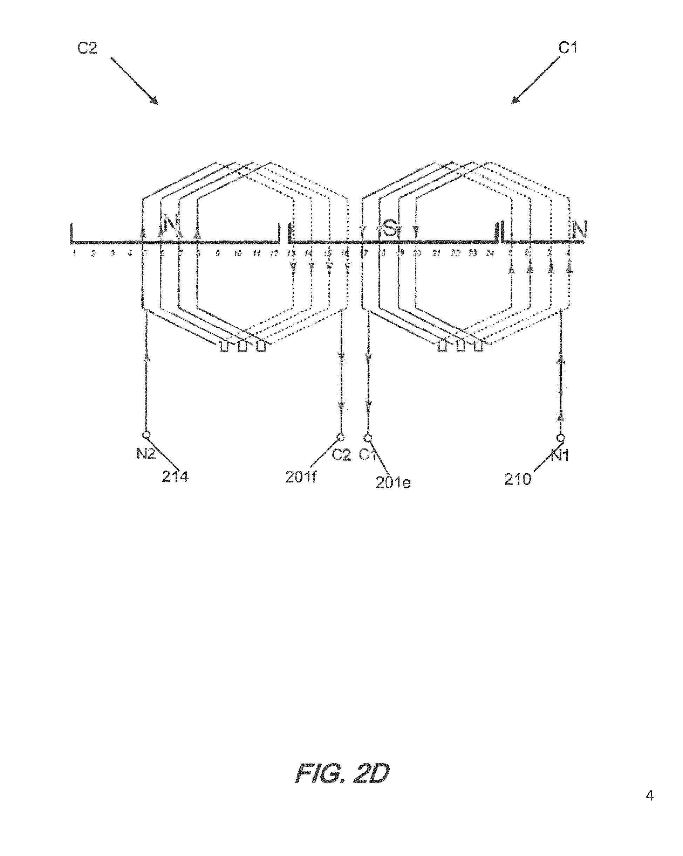

FIG. 2D illustrates an exemplary arrangement of coil windings for each independent phase C (comprising respective single phase C1 and C2 of each 3-phase subsystem) for synchronous generator 102 in accordance with an embodiment of the invention. As shown in FIG. 2D, phase C1 includes an arrangement of coil windings in series that begins at neutral point 210, continues with a series distribution arrangement in slots 4-20, 3-19, 2-18, and 1-17 under N- and S-poles (i.e., slots 1, 2, 3, 4 under an N-pole; slots 17, 18, 19, 20 under an S-pole), and terminates at terminal lead 201 e. Similarly, phase C2 includes an arrangement of coil windings in series that begins at neutral point 214, continues with a series distribution arrangement in slots 5-13, 6-14, 7-15, and 8-16 under N- and S-poles (slots 5, 6, 7, 8 under an N-pole; slots 13, 14, 15, 16 under an S-pole), and terminates at terminal lead 201f.

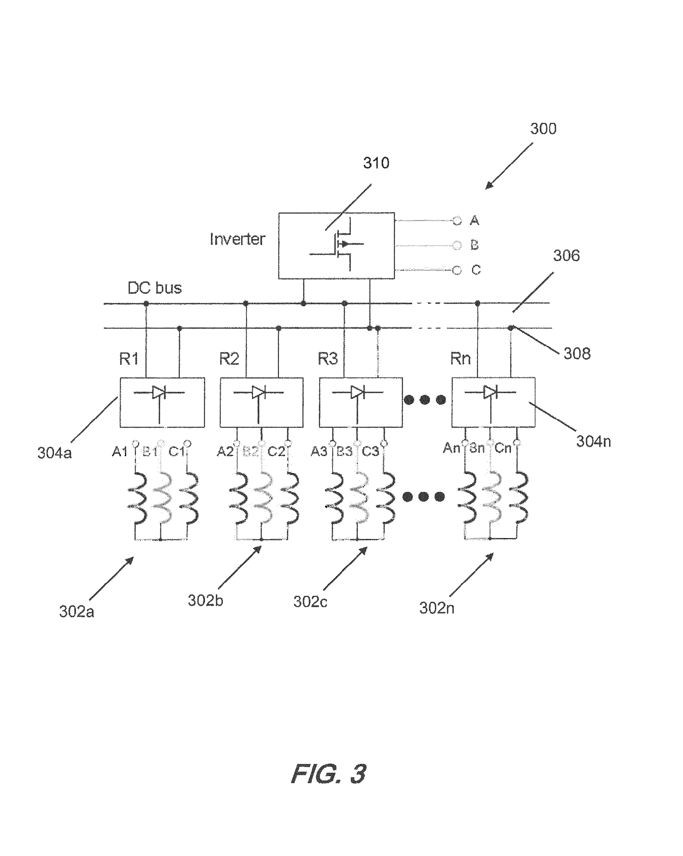

FIG. 3 depicts another embodiment of a circuit topology 300 for a wound-field or PM synchronous generator utilizing a multiplex stator winding configuration. Circuit topology 300 is substantially similar to circuit topology 100 (FIG. 1) and can be formed from a multiple-phase system with four coils per phase in order to provide multiple-phase AC power to respective rectifiers 310-310*n*. Circuit topology 300 includes a multiplex stator winding configuration with multiple and parallel 3-phase subsystems having *n* independent channels for a synchronous generator that supplies multiple phase AC power to respective rectifiers 304a-304*n*. In some non-limiting examples, a 2-pole synchronous machine with 36 slots, three independent channels can be created from the windings; for a 2-pole synchronous machine with 48 slots, four channels can be created; and for a 2-pole synchronous machine with 60 slots, 5 channels can be created. In other non-limiting examples, rectifiers 304a-304*n* can be active (controlled) or passive (uncontrolled) rectifiers. In an embodiment, rectifiers 304a-304*n* are active rectifiers that are controlled by a processor with instructions that implement a DC load sharing algorithm that provides DC power to DC bus 306, 308. A multiple-phase inverter 310 electrically connects to DC bus 306, 308. Inverter 310 can be controlled by a processor in order to adjust a frequency and output voltage of AC power to required values at an output of rectifier 310.

Embodiments of the invention disclosed herein for application to synchronous generators provide increased reliability and redundancy in synchronous generators and improved fault tolerance. Also, the stator winding configuration excludes current unbalance or circulating currents in duplex or multiplex windings connected in parallel. The coil winding configuration can reduce the cross-section of terminal leads of individual windings in each phase of a three-phase subsystem.

The terminology used herein is for the purpose of describing particular embodiments only and is not intended to be limiting of the invention. While the description of the present invention has been presented for purposes of illustration and description, it is not intended to be exhaustive or limited to the invention in the form disclosed. Many modifications, variations, alterations, substitutions or equivalent arrangements not hereto described will be apparent to those of ordinary skill in the art without departing from the scope of the invention as defined by the claims. Additionally, while the various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A multiplex winding synchronous generator, comprising:
a stator core with a plurality of winding slots (9, 10, 11, 12, 17, 18, 19, 20); and
power coils being distributed in each of the winding slots and configured to supply multi-phase alternating current (AC) power;
wherein the stator core includes at least two sets of power coils being distributed in the slots.

2. The synchronous generator of claim 1, wherein each of the at least two sets of power coils is configured as a three-phase subsystem.

3. The synchronous generator of claim 2, wherein each phase of the three-phase subsystem includes four power coils.

4. The synchronous generator of claim 3, wherein the four power coils are connected in series to a terminal lead and a neutral point.

5. The synchronous generator of claim 2, wherein each three-phase subsystem is connected in parallel to one another.

6. The synchronous generator of claim 1, wherein the power coils are distributed as a duplex stator winding configuration.

7. The synchronous generator of claim 1, wherein the power coils are distributed as a multiplex stator winding configuration.

8. A power circuit, comprising:
a synchronous generator (102) comprising:
a stator core with a plurality of winding slots; and
power coils being distributed in each of the winding slots and configured to supply multi-phase alternating current (AC) voltage;
at least one rectifier (104, 106) electrically connected to the power coils and configured to rectify an AC voltage to direct current (DC) voltage;
at least one DC bus (110, 112) for receiving the DC voltage; and
an inverter (108) electrically connected to the at least one DC bus for supplying inverted AC voltage.

9. The power circuit of claim 8, wherein each of the at least two sets of power coils is configured as a three-phase subsystem.

10. The power circuit of claim 9, wherein each phase of the three-phase subsystem includes four power coils.

11. The power circuit of claim 10, wherein the four power coils are connected in series to a terminal lead and a neutral point.

12. The power circuit of claim 9, wherein each three-phase subsystem is connected in parallel to one another.

13. The power circuit of claim 8, wherein the power coils are distributed as a duplex stator winding configuration.

14. The power circuit of claim 8, wherein the power coils are distributed as a multiplex stator winding configuration.

15. The power circuit of claim 8, wherein the stator core includes at least two sets of power coils being distributed in the slots.
